# EUROPEAN PATENT SPECIFICATION

(11) **EP 4 431 697 B1**
(45) Date of publication and mention of the grant of the patent: **21.01.2026**
(21) Application number: 24192428.1
(22) Date of filing: 22.07.2021
(51) Int. Cl.: E21B 33/12

(54) **DOWNHOLE SEAL AND METHOD OF SETTING A DOWNHOLE SEAL**
BOHRLOCHDICHTUNG UND VERFAHREN ZUM SETZEN EINER BOHRLOCHDICHTUNG
JOINT DE FOND DE TROU ET PROCÉDÉ DE RÉGLAGE D'UN JOINT DE FOND DE TROU

(30) Priority: 24.07.2020 EP 20187698; 29.06.2021 EP 21182354
(43) Date of publication of application: 18.09.2024
(62) Divisional of application: 21743537.9
(73) Proprietor: Ruma Products B.V., 7903 BM Hoogeveen (NL)
(72) Inventor: STAM, Walter, 1031 HW Amsterdam (NL); VAN DEN HAM, Evert Jonathan, 5656 AE Eindhoven (NL); WOLTERBEEK, Timotheus Kees Theodorus, 3584 CB Utrecht (NL); CORNELISSEN, Erik Kerst, 1031 HW Amsterdam (NL)
(74) Representative: V.O.

(56) References cited:
- US-A1- 2014 090 844
- US-A1- 2014 090 895
- US-A1- 2019 316 025

## Description

### FIELD OF THE INVENTION

The present invention relates to a downhole seal, for application in subsurface storage of carbon dioxide, and a method of setting such a downhole seal.

### BACKGROUND TO THE INVENTION

Carbon capture and storage (CCS) technologies have sparked major interest globally as one of the options to achieve reduction of carbon dioxide (CO₂) levels in the atmosphere. Depleted oil and gas reservoirs, coal formations, and particularly saline formations (deep underground porous reservoir rocks saturated with brackish water or brine), can be used for storage of CO₂. The injection of CO₂ in deep geological formations uses technologies that have been developed for, and applied by, the oil and gas industry. Well-drilling technology, injection technology, computer simulation of storage reservoir dynamics and monitoring methods can potentially be adapted from existing applications to meet the needs of geological storage.

Chapter 5 of the IPCC Special Report on Carbon Dioxide Capture and Storage, first published in 2005, discusses aspects of underground geological storage of carbon dioxide. At typical storage depths, below about 800-1000 m, supercritical CO₂ has a liquid-like density that provides the potential for efficient utilization of underground storage space in the pores of sedimentary rocks. Potential risks to humans and ecosystems from geological storage may arise from leaking injection wells, abandoned wells, leakage across faults and ineffective confining layers.

A recent review paper "An overview of current status of carbon dioxide capture and storage technologies" by Dennis Y.C. Leung et al. published in Renewable and Sustainable Energy Reviews Vol. 39 (2014), pages 426-443, confirms that one of the important aspects for geological storage is the potential leakage of the stored CO₂, which would impair the effectiveness of the CO₂ confinement and eventually could lead to serious consequences. An example of CO₂ swellable elastomers is known from US2014/090895 A1 and US2019/316025 A1.

The present disclosure addresses avoiding and remedying of potential leaks, particularly within boreholes (wells).

### SUMMARY OF THE INVENTION

In one aspect, there is provided downhole seal comprising a CO₂ swellable elastomer which swells when in contact with CO₂, wherein the CO₂ swellable elastomer has increased levels of polarized chemical groups.

In another aspect, there is provided a method according to claim 12.

### BRIEF DESCRIPTION OF THE DRAWINGS

The drawing figures depict one or more implementations in accord with the present teachings, by way of example only, not by way of limitation. In the figures, like reference numerals refer to the same or similar elements.
Fig. 1 schematically shows a cross sectional view of a downhole elastomer seal on a wellbore tubular cemented in a wellbore in the Earth;
Fig. 2 schematically shows a cross sectional view of a wellbore cladded with a downhole elastomer seal; and
Fig. 3 schematically shows a selection tree for selecting a suitable elastomer.

### DETAILED DESCRIPTION OF THE INVENTION

The person skilled in the art will readily understand that, while the detailed description of the invention will be illustrated making reference to one or more embodiments, each having specific combinations of features and measures, many of those features and measures can be equally or similarly applied independently in other embodiments or combinations.

The present description describes CO₂ swellable elastomer seal, which may for example be used for downhole pressure isolation in a carbon capture storage well. Such well typically contains a cased section in which a casing is cemented in the wellbore. When CO₂ is introduced into a wellbore, the well may cool down. As a result of the temperature decrease, small leaks may be induced, typically at an interface between casing and cement where the cement comes into contact with the casing.

The CO₂ swellable seal can be a sleeve, packer, o-ring or any other type of elastomeric seal that is known to be used in well equipment.

Other sealbores, such as seal areas on a sub surface safety valve, liner hanger, packer and wellhead, may also benefit from CO₂ swellable elastomeric seals. When this CO₂ swellable seal comes into contact with CO₂ it will increase in volume (swell) as a result of CO₂ uptake. The swelling may cause the seal to increase positive pressure against the seal bore or any other type of seal interface and thereby creating a positive pressure / fluid tight seal.

In one group of embodiments, the CO₂ swellable seal may comprise a halogenated elastomer. Preferred halogenated elastomers include fluorinated elastomers, for example of the FKM family (ASTM International standard D1418. It is equivalent to FPM by ISO/DIN 1629 standard), which typically contain vinylidene fluoride as a monomer and/or may contain other fluorine compounds such as, for example, fluorinated vinyl ether, hexafluoropropylene, or tetrafluoroethylene. More preferred, howver, are perhalogenated elastomers, particularly perfluoroelastomers, such as FFKMs (equivalent to FFPMs), for example. Halogenated elastomers (which have increased levels of polarized chemical groups) have been found to yield favorable influence on swellability.

Alternatively, in another group of embodiments, the CO₂ swellable seal may comprise non-fluorinated elastomeric products, which may absorb CO₂ and thereby increase in volume. Examples include M-class rubbers defined in the ASTM International standard D1418, including EPDM (ethylene propylene diene monomer rubber), or (hydrogenated) nitrile rubbers, including nitrile butadiene rubber (NBR) and hydrogenated nitrile butadiene rubber (HNBR).

Regardless of which group of embodiments is employed, the CO₂ swellable seal may also be used in combination with other type of swellable elastomeric seals that swell upon contact with formation water or gas condensate.

Under typical temperature and pressure conditions under which CO₂ is stored in the subsurface environments, which generally exceed 31.1°C and 73.8 bar, it can be assumed that the CO₂ is in the supercritical (SC) phase. In this phase, the viscosity is similar to a gas, but in terms of solubility behavior, it resembles a liquid. For thermoplastic polymers, exposure to supercritical CO₂ is known to lead to weight loss (due to loss of monomers, plasticizers, stabilizers) and plasticization. The chemical composition of the elastomer is relevant for the swelling behavior and stability of the elastomer in contact with (supercritical) CO₂, since some chemical groups have much more interaction with CO₂ than others. For example, a typical EPDM elastomer, which has mainly C-H and CH₃ chemical groups, has relatively little interaction with CO₂, whereas fluorinated elastomers such as FKM have much more interaction with CO₂ because of the fluorine containing chemical groups. Similar effects may be expected for other halogens.

Considerations to select CO₂ swellable elastomers, which adequately swell when in contact with CO₂ and perform reliably as a downhole seal, may include:
(1) High-temperature stability - The temperature stability should be sufficient to withstand temperatures which are governed by geothermal factors. For general applicability, the elastomer should be stable up to about 160°C, but somewhat lower temperatures may be applicable on certain sites.
(2) Low-temperature stability - The elastomer should preferably not be used as downhole seal at any temperature lower than the glass transition temperature (Tg) of the elastomer, since the elastomer would then start to lose its soft and swelling (rubber-like) properties. Although most CCS studies indicate maximum temperature requirements for materials, a few notions are made regarding low-temperature stability as well. Physical phenomena such as the Joule-Thomson effect may cause the actual temperature to go down to well below zero degrees Celsius. While actual temperatures may go down to as low as -70°C, prolonged exposure to such extreme temperatures may be avoided by strategic positioning of the CO₂ swellable elastomers downhole In practice, the elastomer should preferably be able to withstand a temperature as low as -20°C, for low temperature elastomer service, and stability at temperatures below -20°C can be extra advantageous as it increases the window of operability.
(3) Chemical compatibility - For CCS, chemical contaminations are often assumed to be comparable to concentrations noted for enhanced oil recovery (EOR). Besides CO₂, chemical compatibility with one or more of: nitrogen (N₂), hydrocarbons (HC), water and low concentrations of hydrogen sulfide (H₂S), may be recommended. In specific case of elastomers in physical contact with concrete cement, alkaline conditions can occur as well. Alkaline conditions generally correspond to pH exceeding 7.0; however, high alkaline conditions with pH > 11 are not uncommon for pore fluids in for example Portland cement.
(4) CO₂ permeability - Permeability of CO₂ should be sufficiently low, to assure the sealing levels that are desired. Acceptable permeability depends on externally determined requirements.
(5) CO₂ dissolution - The swelling capacity of elastomers in CO₂ is a crucial parameter for the function of the downhole seal. This property is mainly dictated by dissolution of CO₂ in the elastomer.
(6) diffusivity - There is a trade-off between sealing properties and resistance against explosive decompression (ED) properties. High diffusivity helps to prevent rupture of the elastomer in case of an ED event. The lower the diffusivity that can be afforded in view of ED risk, the higher the available swellability. In absence of ED, a low diffusivity is the best outcome to maximize swellability. A combination of strong swelling and high diffusivity is unlikely to be suitable, as permeability (the product of dissolution and diffusion) would be high and the elastomer would have low sealing value as a result. In other words, only limited swelling is allowed in combination with high CO₂ diffusivity (or vice versa) in elastomers to prevent high CO₂ permeability and rupture.

Table 1 shows compatibility data for selected elastomers derived from publicly available sources.

**Table 1**

| Abbr. name | Chemistry | Low Temp. (°C) | High Temp. (°C) | Stability threats |
|---|---|---|---|---|
| CR | C-Cl | -35 | 130 | H₂S, HC, steam |
| CSM | R-S-R | -35 | 130 | H₂S, HC, steam |
| EPDM | C-H; C-H₃ | -45 | 170 | HC |
| FEPM | C-F; C-H₃ | 0 | 230 | HC |
| FFKM | C-F; C-H; C-Cl; R-S-R | -25 to 0 | 300 | |
| FKM | C-F; C-H; C-Cl; R-S-R | -40 to 0 | 200 | H₂S, alkaline, steam |
| HNBR | C-C≡N | -30 | 170 | H₂S, HC, alkaline |
| NBR | C-C≡N | -30 | 125 | H₂S, HC, steam |
| Silicone | O-Si-O | -50 | 300 | H₂S, HC, steam |
| TWT | S-H; R-S-R | -45 | 105 | unknown |

| | | | | |
|---|---|---|---|---|
| CR stands for chloroprene rubber (neoprene); CSM stands for chlorosulfonated polyethylene (Hypalon); FEPM stands for Tetrafluoroethylene propylene (Aflas); TWT stands for polythiol. CR, CSM, NBR, and TWT would generally score low on the high-temperatures stability for most downhole sealing applications. | | | | |

FFKM is considered to be the best selection based on chemical resistance. A major part of the composition of this polymer is the equivalent of fluorinated polymers, and inert to many chemicals. The low-temperature stability is however a weak point. Special grades would be required to drop below 0 °C.

The basic chemistry of FKM is related to FFKM, but additional (cheaper) groups are present. This compromises resistance against the steam, H₂S and alkaline (high pH). Special grades of FKM offer low-temperature stability down to -40°C, whereas normal grades are usable down to 0°C.

Other elastomers which could be considered from a chemical compatibility point of view are HNBR, which is a high temperature stable variant of the nitrile elastomer with equal low temperature properties. However, for both nitrile elastomers, strong alkaline environment would be problematic as well as high concentration of aromatic hydrocarbons. And most of all, H₂S could have a dramatic effect on this nitrile elastomer due to hydrolysis.

Silicones offer an interesting combination from a temperature stability point of view. They exhibit the lowest glass transition temperature of all elastomers - offering flexible materials at low temperature - while the high-temperature stability up to 300°C is impressive as well. However, the nature of the chemistry makes it less stable against steam, hydrocarbons and H₂S.

EPDM could be considered as well, though the hydrocarbon resistance is relatively low. EPDM would not be suitable if the HC content would exceed 4% by volume. In specific cases of CCS, where no presence of hydrocarbons is expected, EPDM should however be considered because of its high resistance to other chemicals involved for CCS. In addition, the lack of fluorine groups lowers the glass transition temperature, implying that EPDM ranks high in terms of low temperature applicability. Noteworthy, EPDM is one of the most cost-effective elastomers.

FEPM is a compromise between EPDM and fluorinated elastomers, directly reflecting its composition. Depending on field conditions, this is the only elastomer listed which has issues regarding low-temperature stability. If applied, safety margins for low-temperature stability will be smaller as compared to other candidates.

Table 2 shows some permeability values at standard temperature and pressure (298 K / 101325 Pa) derived from publicly available sources. The values for HNBR are estimated based on data known for NBR.

**Table 2**

| Abbr. name | CO₂ permeability (cm³·cm⁻¹) | Air permeability (cm³·cm⁻¹) |
|---|---|---|
| EPDM | 85 | 7.9 |
| FEPM | Unknown | Unknown |
| FFKM | 2.5 | 0.3 |
| FKM | 5.0 | 0.1 |
| HNBR | 10 | 0.1 |
| Silicone | 1.3·10³ | |

Despite the favorable stability temperature range, it would appear that silicone proves to be unsuitable for sealing purposes due to the high number for CO₂ permeability.

EPDM has a significantly lower permeability than silicone elastomers, but it remains a more than a factor 10 higher than fluorinated elastomer such as FKM. No values could be found for FEPM, but many reports can be found indicating 'low' gas permeability. Based on the chemistry used, the permeability will probably resemble FKM. The difference between FKM and FFKM is very small and can be neglected, especially since several grades of FKM are available. Hence, in terms of permeability, FFKM, FKM and HNBR would be preferred. EPDM could be considered, depending on system requirements.

Without wishing to be bound by theory, the dissolution of CO₂ in elastomers may be affected by molecular interactions, which may depend on electronegativity of the C=O bond of CO₂ on the one hand, and polymer side groups (e.g. C-H, C-F or C-Cl) on the other hand. Hence, more polar side groups present in the elastomer might have a strong interaction with the CO₂ molecules present. These molecular interactions may explain that the permeability could increase with temperature. In addition, there is evidence of a strong correlation between the (apparent) crosslink density and the permeability and dissolution. Since the number of crosslinks may be affected by aging (leading to fewer crosslinks), the properties of elastomers may chance over time. Due to the reduction of crosslinks, for HNBR it was shown that the CO₂ barrier properties increase, while the dissolution of CO₂ reduces. A lower degree of crosslinks may thus reduce swellability.

Table 3 shows relative swellability (in %) of selected elastomers in contact with CO₂ at various conditions as can be found in publicly available sources.

**Table 3**

| CO₂ phase (P[bar]/T[°C]) | EPDM | FEPM | FKM | FFKM | HNBR |
|---|---|---|---|---|---|
| Gas (50/23) | 9% | 37% | 30% | - | 16% |
| Gas (50/50) | 10% | - | - | - | - |
| SC (150/110) | 15% | - | - | - | - |
| SC (270/100) | 10% | - | - | 57% | 63% |
| SC (310/140) | 6% | 27% | 35% | - | 40% |

Similar to the permeability, the EPDM stands out from the other elastomers, which is possibly due to its deviating non-polar chemistry. While swelling goes up to only 10% for EPDM, the elastomers with more polarized bonds yield much higher swelling with CO₂. In addition, a large variance is identified in the supercritical swelling behavior. However, the public data may not be reliable in relation to present day versions of the elastomers. Nonetheless, it seems that swellability is increased, which matches with the general notion that the solvability of supercritical CO₂ increases while viscosity remains equal to gas phase CO₂.

Besides the number of cross links - mentioned above - the performance of the elastomer is also influenced by the type of chemistry used for cross linking. Although historically 'vulcanization' of natural rubber (elastomers) was done by sulfur addition, the elastomers under review here are commonly crosslinked with i) amine or ii) peroxide crosslinks. One study indicates that FKM with peroxy linkers swells more when compared to FKM with amine linkers. Table 4 shows CO₂ absorption data from publicly available sources for selected elastomer/crosslinker combinations. FKM(1) is based on Viton A (DuPont/Chemours, 66% F) and the FKM(2) is based on Tecnoflon (Solvay, 64% F).

**Table 4**

| Abbr. name | Cross link | CO₂ absorption (%) |
|---|---|---|
| FKM(1) | Amine | 29.5 |
| FKM(2) | Peroxy | 40.5 |
| EPDM | Peroxy | 9.3 |
| FEPM | Peroxy | 36.8 |

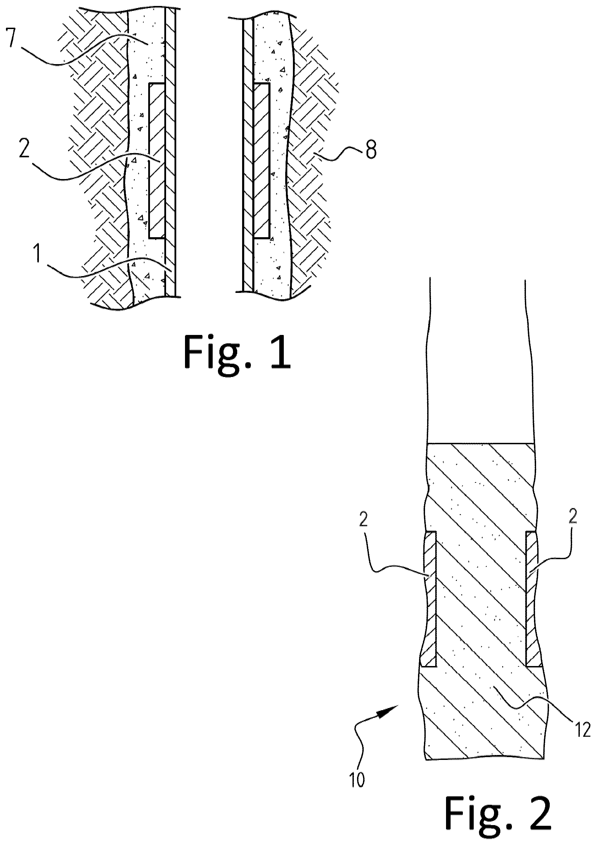

In one example, the CO₂ swellable seal may be applied to a wellbore tubular in the manner as described in WO 2019/238566 A, which is incorporated herein in its entirety. As illustrated in Fig. 1, the seal 2 may thus be applied in the form of an elastomer sleeve that snugly fits to an outside surface of the wellbore tubular 1 after at least partly relaxing the elastically stretching force that was applied during installation of the sleeve on the wellbore tubular 1. The wellbore tubular 1 extends into a borehole 10 in an Earth formation 8. The borehole 10 may be a wellbore. A cement sheath 7 may be provided on the outside of the wellbore tubular 1, which fully surrounds the elastomer sleeve. This may be achieved by pumping cement on the outside of the wellbore tubular, whereby fully surrounding the elastomer sleeve.

In another example, illustrated in Fig. 2, the CO₂ swellable seal 2 may be applied inside a borehole 10, or inside a wellbore tubular, for example in the manner as disclosed in US 2019/0211642 A, which is incorporated herein in its entirety. After cladding the inner surface of the borehole 10 (which may be uncased, or be lined with a wellbore tubular such as a casing tubular) with the seal, a well bore plugging material, such as cement, may be inserted into the seal 2 and allowed to harden and form a plug 12. The seal then forms a swellable sealing layer between the plug and the inner surface against which it was cladded.

In another example, the CO₂ swellable seal may be applied in a swellable packer.

When the elastomer is confined, for example between a wellbore tubular and cement, any swelling will be limited by the space available. For instance, an EPDM layer of 2 mm thick would swell by approximately 200 µm, whereas FKM would swell over 0.5 mm. Depending on precise specifications, the swelling of e.g. EPDM could therefore be sufficient despite the relatively slow swellability. If the swelling can be confined, the permeability of the elastomer can be lowered as well, since the permeability is directly related to the CO₂ solubility (swelling) and diffusion. Studies for HNBR indicate that lower CO₂ dissolution also lowers the diffusion. Hence, the permeability may be lowered for a confined elastomer seal. The opposite may also hold true: for a seal that is not at all confined, the highest permeability should be expected.

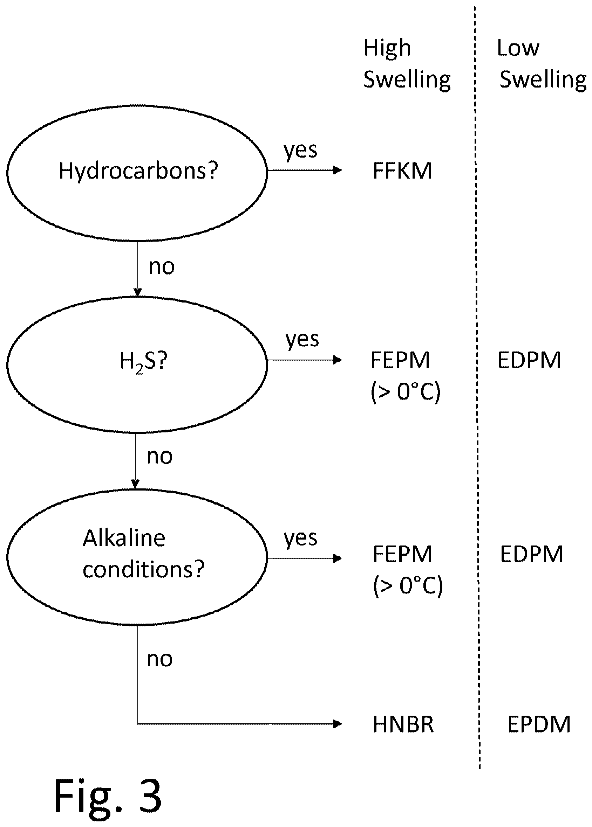

Figure 3 shows a decision tree which can be used in a method of selecting the elastomer for a specific application as swellable seal in subsurface CO₂ storage. It can be seen that no low swelling option is presently available for environments which contain hydrocarbons, such as more than 4% by volume of hydrocarbons.

The elastomer may be spiked with an additive compound, which is capable of engaging in a precipitation reaction with water and/or CO₂ whereby growing the solid molar fraction of solids within the downhole seal. Preferably, the solids grown this way are not soluble in water or other wellbore fluids that are prevalent downhole. This enhances the long-term sealing capability.

It has been found that metal oxides, particularly a selection of alkaline earth metal oxides, can be applied as inclusions in the elastomer. Suitable alkaline earth metal oxides may include at least MgO, CaO, SrO, and BaO. Calcium oxide (CaO) has particular potential as it is a cost-effective choice.

Taking CaO as (non-limiting) example, upon exposure to CO₂, for example after possible ingress of carbon dioxide into the elastomer material, CaO inclusions can chemically react with the CO₂ whereby forming solid carbonates:

CaO _{(*s*)} + CO_{2 (*aq*)} → CaCO_{3 (*s*)}.

Furthermore, upon exposure to water, CaO inclusions can hydrate whereby forming calcium hydroxide:

CaO _{(*s*)} + H₂O _{(*l*)} → Ca(OH)_{2 (*s*)}.

This reaction product, in turn, is can chemically react with the CO₂ whereby forming solid carbonates:

Ca(OH)_{2 (*s*)} + CO_{2 (*aq*)} → CaCO_{3 (*s*)} + H₂O _{(*l*)}.

Each of these reactions above involve an increase in solid volume. For direct carbonation of CaO, this increase constitutes about 20.1 cm³ per mol of CaO converted (120% solid volume increase, i.e. more than doubling the volume). For conversion of calcium hydroxide to calcium carbonate, the solid volume change of reaction is about 3.4 cm³ per mol of Ca(OH)₂ converted (10% solid volume increase). This increase in solid volume imparts an additional swelling effect of the elastomer body upon specific exposure to carbon dioxide. These solid (precipitating) carbonate reaction products have a relatively low solubility, enhancing the ability of the elastomer material to prevent migration of these compounds out of the swellable elastomer body.

The hydration reaction also involves an increase in solid volume, gaining about 16.7 cm³ per mol of CaO converted (~99.6% solid volume increase, i.e. almost a doubling of solid volume), thereby causing additional swelling of the elastomer seal compared to seals that have not been spiked this way. It is therefore preferred that the elastomer seal is hygroscopic, in order to attract water to promote the hydration reaction. This may suitably be achieved by adding a salt to the elastomer material, which salt may be hydroscopic and soluble in water. Sodium chloride (NaCl) and calcium chloride (CaCl₂) are good low-cost choices, but many other salts can be used as well.

Hygroscopic properties of the elastomer seal may also be beneficial in attracting CO₂ dissolved in water (aqueous phase). As CO₂ dissolved in water (aqueous phase) causes the water to become acidic, the subsequent carbonation reactions will be promoted by an alkaline nature of the inclusions.
The low solubility of the reaction product will help restrict the migration of the compound out of the swellable polymer body.

In addition to calcium oxide, magnesium oxide may have specific potential for the purpose described above, for example when volume increase is a limiting factor. MgO is expected to react slower than CaO, but the solid volume increase of the hydration reaction is larger than with CaO. This may further enhance the longevity of the swelling effect.

Furthermore, the presence of earth alkaline oxides and earth alkaline hydroxides in the elastomeric material will result in highly alkaline conditions (pH >10) and therefore chemically more compatible with concrete cements such as Portland cement which may be in close contact with the elastomer in the downhole use.

The metal oxide inclusions may be mixed into the elastomer mass, prior to vulcanization, in a moulding apparatus, in the same manner as described for salt particles in e.g. US Patent No. 7,527,099. Compound preparation is considered to be within the common general knowledge of the person skilled in the art, as evidenced by e.g. Werner Hofmann, Rubber Technology Handbook, 2nd ed. (1996), Hanser/Gardner Publications, Cincinnati, ISBN 1-56990-145-7 Chapter 5: Processing of elastomers, Compound Preparation.

The person skilled in the art will understand that the present invention can be carried out in many various ways without departing from the scope of the appended claims.

## Claims

1. A downhole seal (2) **characterized in that** it comprises a CO₂ swellable elastomer which swells when in contact with CO₂, wherein the CO₂ swellable elastomer has increased levels of polarized chemical groups.

2. The downhole seal of claim 1, wherein the CO₂ swellable elastomer comprises a halogenated elastomer.

3. The downhole seal of claim 1, wherein the CO₂ swellable elastomer comprises a perhalogenated elastomer.

4. The downhole seal of claim 1, the CO₂ swellable elastomer comprises EPDM elastomer.

5. The downhole seal of any one of the preceding claims, which is mechanically confined in a space before swelling.

6. The downhole seal of any one of the preceding claims, wherein the CO₂ swellable elastomer comprises inclusions comprising a metal oxide.

7. The downhole seal of claim 6, wherein the metal oxide is susceptible to chemically react with CO₂.

8. The downhole seal of claim 6 or 7, wherein the metal oxide is susceptible to chemically react with water.

9. The downhole seal of claim 8, wherein a reaction product from a chemical reaction of the metal oxide with water is susceptible to chemically react with CO₂.

10. The downhole seal of any one of claims 6 to 9, wherein the metal oxide is an alkaline earth metal oxide.

11. The downhole seal of any one of claims 6 to 10, wherein the CO₂ swellable elastomer further comprises a salt that is hydroscopic and soluble in water.

12. A method of setting a downhole seal, **characterized in that** it comprises installing a downhole seal comprising a CO₂ swellable elastomer in a downhole location within a borehole and exposing the downhole seal to contact with CO₂ after said installing, whereby the CO₂ causes the downhole seal to swell, wherein a concentration of hydrocarbons in said CO₂ is preferably below 4% by volume, and wherein the CO₂ swellable elastomer preferably comprises inclusions comprising a metal oxide, wherein the CO₂ swellable elastomer has increased levels of polarized chemical groups.

13. The method of claim 12, wherein the metal oxide is susceptible to chemically react with CO₂, further comprising allowing a chemical reaction between the metal oxide and CO₂ in contact with the metal oxide whereby forming a carbonate which precipitates in a solid phase within the downhole seal.

14. The method of claim 12 or 13, wherein the metal oxide is susceptible to chemically react with water, further comprising allowing a hydration chemical reaction between the metal oxide and water in contact with the metal oxide whereby forming a reaction product which, in turn, is susceptible to chemically react with CO₂, said method further comprising allowing a carbonation reaction between the reaction product and CO₂ in contact with the reaction product whereby forming said carbonate which precipitates in a solid phase within the downhole seal, wherein the metal oxide is preferably an alkaline earth metal oxide.

15. The method of any one of claims 12 to 14, wherein the CO₂ swellable elastomer further comprises a salt that is hydroscopic and soluble in water.

## Patentansprüche

1. Schrägbohrlochdichtung (2), **dadurch gekennzeichnet, dass** sie ein CO₂-quellbares Elastomer umfasst, das bei Kontakt mit CO₂ quillt, wobei das CO₂-quellbare Elastomer erhöhte Mengen an polarisierten chemischen Gruppen aufweist.

2. Schrägbohrlochdichtung nach Anspruch 1, wobei das CO₂-quellbare Elastomer ein halogeniertes Elastomer umfasst.

3. Schrägbohrlochdichtung nach Anspruch 1, wobei das CO₂-quellbare Elastomer ein perhalogeniertes Elastomer umfasst.

4. Schrägbohrlochdichtung nach Anspruch 1, wobei das CO₂-quellbare EPDM-Elastomer umfasst.

5. Schrägbohrlochdichtung nach einem der vorstehenden Ansprüche, die vor dem Aufquellen mechanisch in einem Raum eingeschlossen ist.

6. Schrägbohrlochdichtung nach einem der vorstehenden Ansprüche, wobei das CO₂-quellbare Elastomer Einschlüsse umfasst, umfassend ein Metalloxid.

7. Schrägbohrlochdichtung nach Anspruch 6, wobei das Metalloxid für eine chemische Reaktion mit CO₂ empfänglich ist.

8. Schrägbohrlochdichtung nach Anspruch 6 oder 7, wobei das Metalloxid für eine chemische Reaktion mit Wasser empfänglich ist.

9. Schrägbohrlochdichtung nach Anspruch 8, wobei ein Reaktionsprodukt aus einer chemischen Reaktion des Metalloxids mit Wasser für eine chemische Reaktion mit CO₂ empfänglich ist.

10. Schrägbohrlochdichtung nach einem der Ansprüche 6 - 9, wobei das Metalloxid ein Erdalkalimetalloxid ist.

11. Schrägbohrlochdichtung nach einem der Ansprüche 6 bis 10, wobei das CO₂ quellbare Elastomer ferner ein Salz umfasst, das hygroskopisch und wasserlöslich ist.

12. Verfahren zum Setzen einer Schrägbohrlochdichtung, **dadurch gekennzeichnet, dass** es das Einbringen einer Schrägbohrlochdichtung, die ein CO₂-quellbares Elastomer umfasst, an einer Bohrlochstelle innerhalb eines Bohrlochs und das Aussetzen der Bohrlochdichtung dem Kontakt mit CO₂ nach dem Einbringen umfasst, wodurch das CO₂ die Bohrlochdichtung zum Quellen bringt, wobei die Konzentration an Kohlenwasserstoffen in dem CO₂ vorzugsweise unter 4 Vol.-% liegt und wobei das CO₂-quellbare Elastomer vorzugsweise Einschlüsse umfasst, die ein Metalloxid umfassen, wobei das CO₂-quellbare Elastomer erhöhte Gehalte an polarisierten chemischen Gruppen aufweist.

13. Verfahren nach Anspruch 12, wobei das Metalloxid für eine chemische Reaktion mit CO₂ empfänglich ist, ferner umfassend das Erlauben einer chemischen Reaktion zwischen dem Metalloxid und dem CO₂ in Kontakt mit dem Metalloxid, wobei ein Karbonat gebildet wird, das in einer festen Phase innerhalb der Schrägbohrlochdichtung präzipitiert.

14. Verfahren nach Anspruch 12 oder 13, wobei das Metalloxid für eine chemische Reaktion mit Wasser empfänglich ist, ferner umfassend das Erlauben einer chemischen Hydratationsreaktion zwischen dem Metalloxid und dem Wasser in Kontakt mit dem Metalloxid, wobei ein Reaktionsprodukt gebildet wird, das wiederum für eine chemische Reaktion mit CO₂ empfänglich ist, das Verfahren ferner umfassend das Erlauben einer Karbonisierungssreaktion zwischen dem Reaktionsprodukt und dem CO₂ in Kontakt mit dem Reaktionsprodukt, wobei das Karbonat gebildet wird, das in einer festen Phase innerhalb der Schrägbohrlochdichtung präzipitiert, wobei das Metalloxid vorzugsweise ein Erdalkalimetalloxid ist.

15. Verfahren nach einem der Ansprüche 12 bis 14, wobei das CO2-quellbare Elastomer ferner ein Salz umfasst, das hygroskopisch und wasserlöslich ist.

## Revendications

1. Joint de fond de puits (2) **caractérisé en ce qu'**il comprend un élastomère gonflable au CO₂ qui gonfle au contact du CO₂ , dans lequel l'élastomère gonflable au CO₂ présente des niveaux accrus d' s de groupes chimiques polarisés .

2. Joint de fond de puits selon la revendication 1, dans lequel l'élastomère gonflable au CO₂ comprend un élastomère halogéné.

3. Joint de fond de puits selon la revendication 1, dans lequel l'élastomère gonflable au CO₂ comprend un élastomère perhalogéné.

4. Joint de fond de puits selon la revendication 1, dans lequel l'élastomère gonflable au CO₂ comprend un élastomère EPDM.

5. Joint de fond de puits selon l'une quelconque des revendications précédentes, qui est confiné mécaniquement dans un espace avant gonflement.

6. Joint de fond de puits selon l'une quelconque des revendications précédentes, dans lequel l'élastomère gonflable au CO₂ comprend des inclusions comprenant un oxyde métallique.

7. Joint de fond de puits selon la revendication 6, dans lequel l'oxyde métallique est susceptible de réagir chimiquement avec le CO₂.

8. Joint de fond de puits selon la revendication 6 ou 7, dans lequel l'oxyde métallique est susceptible de réagir chimiquement avec l'eau.

9. Joint de fond de puits selon la revendication 8, dans lequel un produit de réaction chimique entre l'oxyde métallique et l'eau est susceptible de réagir chimiquement avec le CO₂.

10. Joint de fond de puits selon l'une quelconque des revendications 6 à 9, dans lequel l'oxyde métallique est un oxyde de métal alcalino-terreux.

11. Joint de fond de puits selon l'une quelconque des revendications 6 à 10, dans lequel l'élastomère gonflable au CO₂ comprend en outre un sel qui est hygroscopique et soluble dans l'eau.

12. Procédé de mise en place d'un joint de fond de puits, **caractérisé en ce qu'**il comprend l'installation d'un joint de fond de puits comprenant un élastomère gonflable au CO₂ dans un emplacement de fond de puits à l'intérieur d'un trou de forage et l'exposition du joint de fond de puits au contact avec le CO₂ après ladite installation, de sorte que le CO₂ provoque le gonflement du joint de fond de puits, dans lequel une concentration d'hydrocarbures dans ledit CO₂ est de préférence inférieure à 4 % en volume, et dans lequel l'élastomère gonflable au CO₂ comprend de préférence des inclusions comprenant un oxyde métallique, dans lequel l'élastomère gonflable au CO₂ présente des niveaux accrus de groupes chimiques polarisés.

13. Procédé selon la revendication 12, dans lequel l'oxyde métallique est susceptible de réagir chimiquement avec le CO₂, comprenant en outre le fait de permettre une réaction chimique entre l'oxyde métallique et le CO₂ en contact avec l'oxyde métallique, formant ainsi un carbonate qui précipite en phase solide à l'intérieur du joint de fond de puits.

14. Procédé selon la revendication 12 ou 13, dans lequel l'oxyde métallique est susceptible de réagir chimiquement avec l'eau, comprenant en outre le fait de permettre une réaction chimique d'hydratation entre l'oxyde métallique et l'eau en contact avec l'oxyde métallique, formant ainsi un produit de réaction qui, à son tour, est susceptible de réagir chimiquement avec le CO₂ , ledit procédé comprenant en outre le fait de permettre une réaction de carbonatation entre le produit de réaction et le CO₂ en contact avec le produit de réaction, formant ainsi ledit carbonate qui précipite en phase solide dans le joint de fond de trou, dans lequel l'oxyde métallique est de préférence un oxyde de métal alcalino-terreux.

15. Procédé selon l'une quelconque des revendications 12 à 14, dans lequel l'élastomère gonflable au CO₂ comprend en outre un sel qui est hygroscopique et soluble dans l'eau.
